# EUROPEAN PATENT SPECIFICATION

(11) **EP 3 106 332 B1**
(45) Date of publication and mention of the grant of the patent: **15.04.2020**
(21) Application number: 15172764.1
(22) Date of filing: 18.06.2015
(51) Int. Cl.: B60J 7/10

(54) **INFLATABLE TUBULAR ELEMENT FOR LAYING PROTECTIVE TARPAULINS**
AUFBLASBARES SCHLAUCHFÖRMIGES ELEMENT ZUM VERLEGEN VON SCHUTZPLANEN
ÉLÉMENT TUBULAIRE GONFLABLE POUR LA POSE DE BÂCHES DE PROTECTION

(43) Date of publication of application: 21.12.2016
(73) Proprietor: Università degli studi di Bergamo, 24129 Bergamo (IT); Alfa Servizi Srl, 20133 Milano (IT)
(72) Inventor: Russo, Davide, 50122 Firenze (IT); Morotti, Roberto, 24128 Bergamo (IT); Carrara, Paolo, 24060 Sovere (BG) (IT); De Vecchi, Giordano, 24052 Azzano San Paolo (BG) (IT)
(74) Representative: Karaghiosoff, Giorgio Alessandro

(56) References cited:
- EP-A1- 0 439 086
- EP-A1- 1 964 704
- WO-A1-00/34076
- CN-Y- 2 276 429
- FR-A1- 2 575 504
- FR-A1- 2 947 489
- US-A- 3 994 102
- US-A- 5 941 594

## Description

The present invention addresses the field of covers, particularly protective tarpaulins for covering heavy truck bodies.

At present, large surfaces are usually covered manually, with one or more operators first laying a tarpaulin, possibly having a large size, and then placing it on the relevant surface. In the particular application of covering heavy truck bodies, this is highly inconvenient, because the operator is required to climb and get into the truck body, which may contain sharp, rusty, instable or otherwise dangerous materials. Furthermore, this operation requires the use of a safety harness and anchor. This results in an increase of operating times, discomfort and hazards for the operator.

In view of obviating the above drawbacks, a number of technical arrangements have been provided, in which mechanical support structures are provided, in combination with mechanisms to be installed on the body or tractor of the truck. Nevertheless, these are complex, high-cost dedicated arrangements, which require each vehicle to be associated with special equipment, that has to be considered as part of the vehicle itself.

EP2378022 discloses a system that allows an operator to automatically deploy and lay a tarpaulin on a truck body. An inflatable tarpaulin is employed, which is first wound and accommodated in the gap between the cabin and the body, and is inflated to be gradually deployed on the body, without requiring any manual action by the operator. As the tarpaulin is deflated, it tends to be restored to its cylindrical rest position, due to the provision of resilient return ribs.

While this system is simpler than mechanical support structures, it must still be installed aboard the vehicle, which makes it poorly versatile and expensive although the concept of employing pneumatic materials that assume different shapes at rest and in operation goes in the right direction.

Therefore, the object of the present invention is to solve at least some of the above problems by providing a cover with a system that allows self-placement of a protective tarpaulin with the operator on the ground, without using structures external to or integrated in the tractor of the vehicle, and requiring as little action by the operator as possible.

The invention fulfills the above object using pneumatic structures that can be assembled together. The core of the invention is represented by a modular element that can be inflated to a working shape, from an initial rest shape in which the element is fully or partially deflated. The element has anchor points for tubular elements of the same type, such that it may form a multiplicity of support structures for a protective tarpaulin, which may thus be laid in different manners, when such tubular element/s are coupled to said tarpaulin.

In practice, the tarpaulin is disengaged from the support structure, which is movable and modular to adapt to various laying needs, without requiring the use of components to be installed on the vehicle. This is ensured by the use of pneumatic elements, which are designed to be associated with the tarpaulin in multiple highly advantageous configurations.

In order to ensure that the structure can support the distributed weight of the tarpaulins, according to the invention the inflatable element, which is typically made of a plastic or elastic material is advantageously inserted in a substantially cylindrical fabric envelope. Namely, the inventors found that the use of abrasion-resistant technical fabrics, such as Dacron, Kevron, or Cordura, and special seams, which prevent tearing when the tube is inflated to high pressures, provides optimal results in terms of size of the structure and rigidity.

The tubular element has an annular appendix at one end, which is designed to be coupled to corresponding hooks or eyelets of tubular elements of the same type, to form modular T-shaped structures. The element typically extends along a straight axis, and has at least one transverse tape with an eyelet for engagement with corresponding eyelets or hooks associated with further tubular elements or with the tarpaulin with which the element is designed to be coupled when it is installed. A handle, particularly having a longitudinal extension, is advantageously provided at one end, particularly the end opposite to that with the annular appendix.

For easy coupling with the tarpaulin, the element may comprise a longitudinal fabric or hook-and-loop strap of a fastening stretch or Velcro assembly. The corresponding fabric or hook-and-loop strap of the pair is placed on the tarpaulin, typically in a peripheral position, to provide removable coupling.

In one embodiment, three tubular elements are used to form a support structure for a tarpaulin. Two elements are connected by the respective annular appendix to a pair of eyelets or hooks of the third tubular elements, typically proximate to the center to form a double-T configuration composed of a cross member and a pair of posts in operation with inflated elements.

The invention relates to a protective tarpaulin for covering a heavy truck body that has elements for coupling or containing one or more tubular elements of the invention, to form a support structure for said tarpaulin provided in combination with said tubular elements.

In one embodiment, there are three tubes to form a double-T support structure having a cross member and two posts. The cross member is attached at one side of the tarpaulin for the tarpaulin to be stretched along its length or width and for an operator to act upon the posts to move the tarpaulin over the body. Alternatively, the cross member may be attached to the tarpaulin in a center position, for a portion of the tarpaulin to be stretched and folded along its length or width and for an operator to act upon the posts to move the tarpaulin over the body. In order to add rigidity to the inflatable structure, the cross member may be equipped with a reinforcement rod.

In another embodiment, the tubular elements are attached or integrated along two opposite sides of the tarpaulin to form a pair of ribs of the tarpaulin when they assume the working shape. In this case, the tarpaulin and/or tubular elements have fastening elements, e.g. of magnetic type, to attach the structure to the body to be covered.

The tarpaulin may be advantageously provided in combination with a truck body, for instance having the shape of a parallelepiped, with the tarpaulin being attached to its side surface substantially along the entire height, or proximate to its maximum height, such that it may be folded back onto its upper surface once the tubular elements have assumed the working shape.

The tarpaulin may be provided in combination with a single tubular element whose working shape is an arc-shape. In this case, the tarpaulin is attached to the tubular element by loops like in curtains.

Another solution is that three tubular elements are assembled into a portal-like frame, composed of a pair of posts and a cross member. The posts have rolling elements at their base, to allow translation of the cross member of the portal above the body when the posts are moved at the opposite sides of the body. The tarpaulin is initially wound on the cross member of the portal, and is attached proximate to the top of a side surface of the body, e.g. by magnets, and is unwound therefrom as the portal is translated along the length of the body.

Further features and improvements will form the subject of the dependent claims.

The characteristics of the invention and the advantages derived therefrom will be more apparent from the following detailed description of the annexed drawings, in which:
Fig. 1 is a front and perspective view of an embodiment of the tubular element of the invention with enlarged details.
Figs. 2 to 7 show various configurations with the tubular element being used to form support structures for tarpaulins and corresponding laying configurations by an operator in the form of a sequence of images.

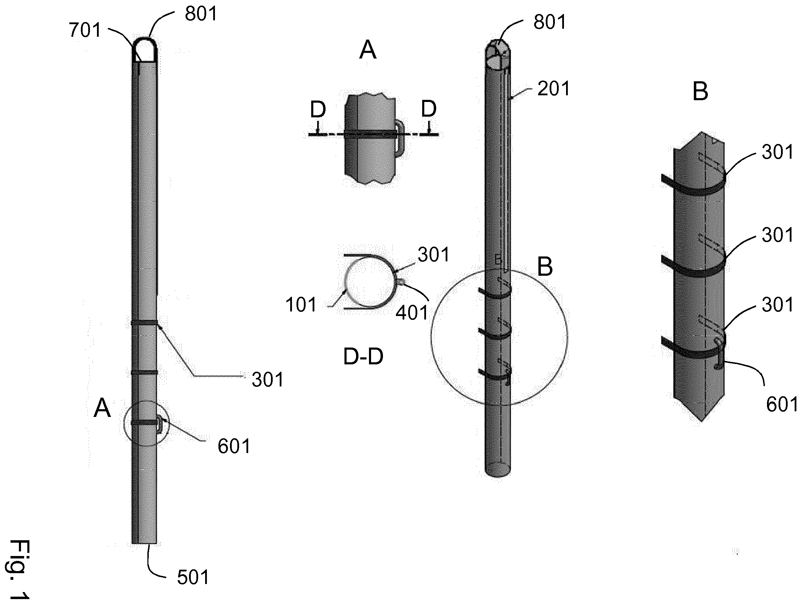

Figure 1 shows a preferred embodiment of a tubular element of the present invention, which is designed to be used as a support element for laying a tarpaulin on a heavy truck body. The guiding principle of the present invention is also applicable to tarpaulins designed for a variety of other applications.

The tubular element of the figures, which is drawn to a scale of 1 to 10, has the shape of a cylinder having a length of 5 m and a diameter of 25 cm. These values have been found to be appropriate for tarpaulins of the type and size as commonly used for covering truck bodies, but may be obviously modified according to the particular type of installation.

Removable structures with inflatable tubes ensure light weight and minimize space requirements. Nevertheless, since tarpaulins designed for use as covers are very large and heavy, a certain level of rigidity must be imparted to the structure to support the distributed weight of these tarpaulins. On the other hand, since the structure is required to have a small size to facilitate transport and use by a single operator, the tubes shall be inflated to a greater pressure, and any deformation thereof shall be prevented. Therefore, the element is required to be formed within a well-defined shape, such that it will not be deformed when it is inflated to significant pressures, possibly of 7-8 bar. In view of the above, according to the invention the inflatable element, which is typically made of a plastic or elastic material is inserted in a substantially cylindrical fabric envelope. The use of abrasion-resistant technical fabrics, such as Dacron, Kevron, or Cordura, and special seams, which prevent tearing when the tube is inflated to high pressures, allows fulfillment of the above purposes.

In the particular example of Fig. 1, the tubular element is made of a plastic material with an outer Cordura skin 101. It has a 2.5 m longitudinal Velcro strap 201, for stretch coupling to a tarpaulin and three annular tapes 301 with an eyelet 401, arranged with a spacing of 50 cm, starting from 1.2 m from the end 501. The tapes 301 are arranged all around the tubular element. A handle 601 whose size allows grasping thereof by one hand, is longitudinally arranged, proximate to one of the tapes 301, at 1.1 m from the end 501. The opposite end 701 has an appendix at its top, which is formed into a longitudinal coupling eyelet 801 to create T- or double T-shaped configurations. The tubular element may be attached to the tarpaulin using the Velcro strap or one or more fastening eyelets. Alternatively, one or more tubular elements may be integrated in the tarpaulin, e.g. by utilizing one or more pockets in which said elements may be received, and thereby forming highly compact structures.

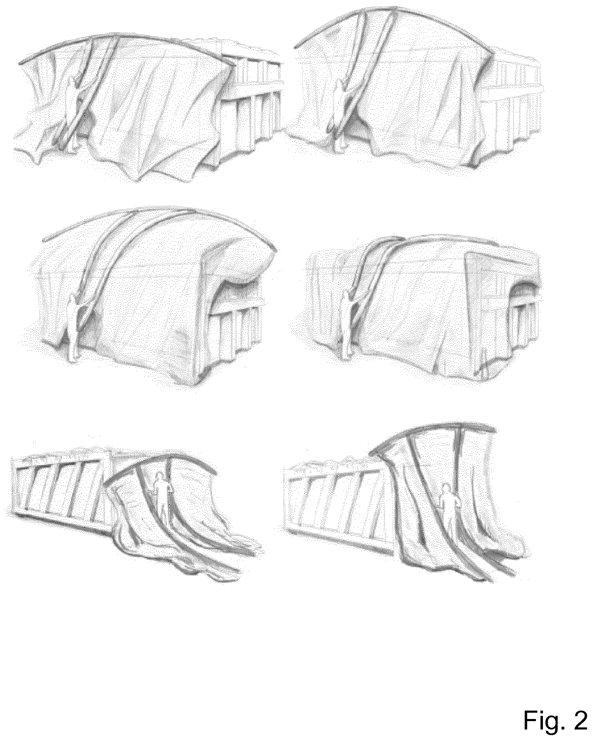

In addition to the dimensions of the tube, the number and position of the anchors may also change, to create modular elements with an optimized versatility. The same applies to the shape, although the inventors could find that the particular cylindrical configuration with a straight axis is the most appropriate to facilitate combination of elements and hence provide various covering arrangements, examples whereof will be now described with reference to Figures 2 to 7.

### Thrust

In the thrust configuration (see Fig. 2), the tubes are arranged to form a double T-(TT) shape, that maintains the tarpaulin well-stretched over its entire length, and two posts, having the dual purpose of moving the tarpaulin over the body and preventing contact with the material contained therein. The thrust configuration may envisage some differences according to the relevant working area, i.e. the short side or the long side, with pros and cons according to the selected configuration.

### Throwing configuration

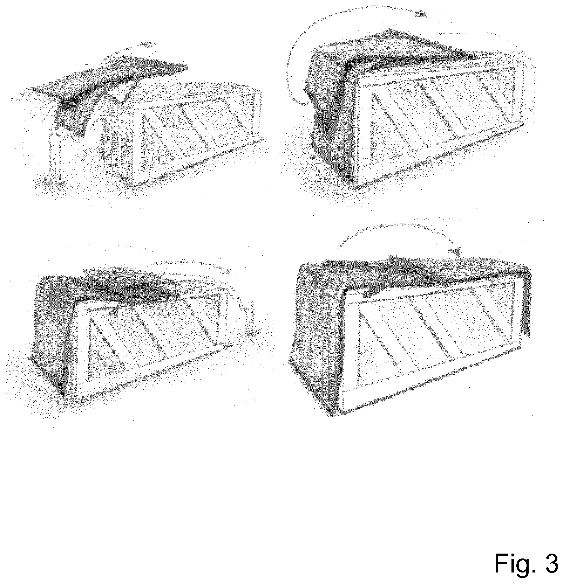

In the configuration in which the tarpaulin is thrown (see Fig. 3), 3 tubes are also arranged in a double T (TT) - shape, and a reinforcement bar is added to increase the rigidity of the inflatable structure. Here again, the throwing configuration may envisage some differences according to the relevant working area, i.e. the short side or the long side, with pros and cons according to the selected configuration.

### Folding configuration

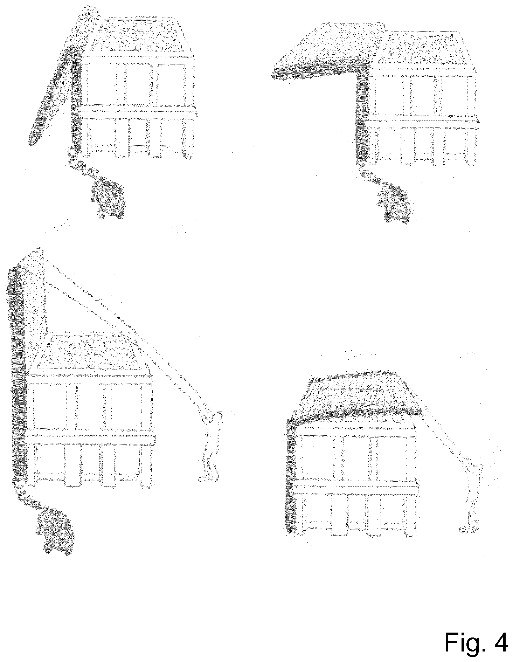

In the cover having a folding behavior (see Fig. 4), the tarpaulin is initially attached by magnets along the long side, and three equally-spaced tubes, arranged perpendicular to the linger side, act as thrust/support ribs. Thus, the tubes are integrated or attached to the tarpaulin and as they are inflated they vertically stretch the tarpaulin, which is later folded back by the operator using ropes, to cover the truck body.

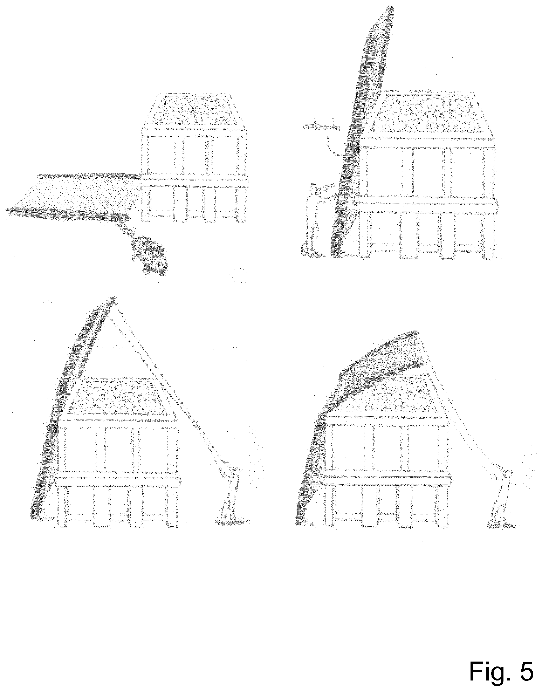

In the variant as shown in Fig. 5, the tubes are inflated on the ground before the folding step, to be later arranged separate from the tarpaulin to form a kind of frame structure. Then the operator places the structure with a vertical orientation against one side of the truck body. Using one or more magnets, the tarpaulin is attached proximate to the top of the body and is later folded back above the body with the help of ropes, as shown in the last image of the sequence of Fig. 5.

In both cases, the tarpaulin may be positioned without requiring excessive care, but must be prepared before the covering step.

### Arc

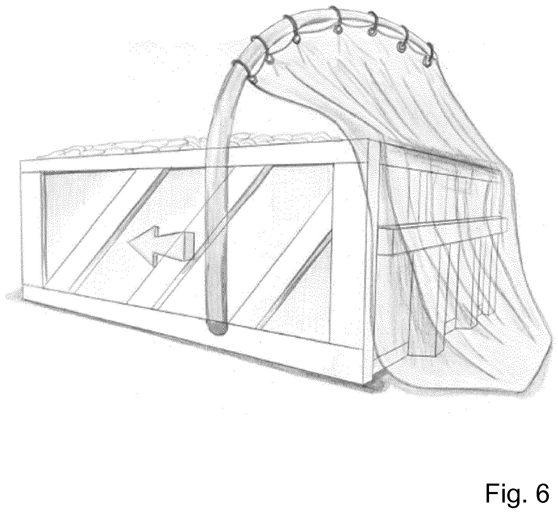

In the case of an arc-shaped cover (see Fig. 6) a single tube is employed, which acts as a rod, with the tarpaulin attached at one of its ends. The covering step may be carried out either on the long side or on the short side of the truck body. In the latter case, the cover of the entire body should be divided into two parts.

### Portal

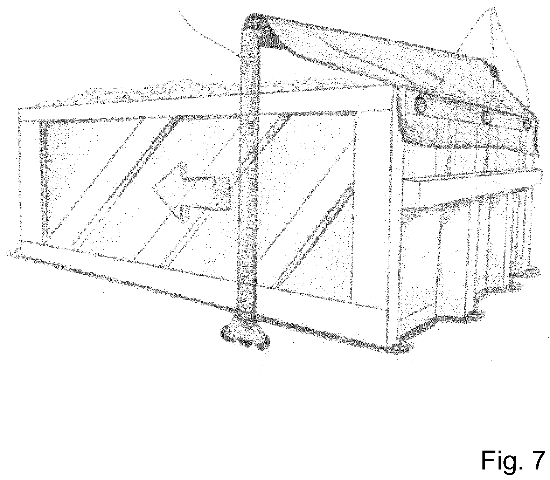

The portal-like structure (Fig. 7) is still obtained using 3 inflatable tubes, but uses wheels at the base of the portal posts, thereby avoiding the need of dragging the tubes on the ground, which would be damaged thereby. The operator inflates the portal structure on the ground and later places it against the short side before pulling it.

Obviously, the invention is not limited to the embodiments described and illustrated herein but may be greatly varied, especially as regards construction. For example, the tubular elements may be designed for use as a support for tarpaulins for swimming pools, cars and bulky containers of any kind, using a variety of assembly configurations with any number of elements whatever. The above is without departure from the guiding principle disclosed above and claimed below.

## Claims

1. A combination of a protective tarpaulin for covering a heavy truck body with one or more tubular elements the tarpaulin having elements for coupling or containing one or more of the said tubular elements;
the said tubular elements being inflatable, to a working shape from an initial rest shape in which the element is deflated or partially deflated, **characterized in that** the tubular element is of modular
type and has anchor points (401, 801) for tubular elements of the same type, such that it may form a multiplicity of support structures for said protective tarpaulin, which may thus be laid in different manners, when such tubular element/s are coupled to said tarpaulin and **in that**
each tubular element has an annular appendix (801) at one end (701), which is designed to be coupled to corresponding hooks (401) or eyelets of tubular elements of the same type, to form T-shaped structures;
the at least one tubular element extends along a straight axis, and
has at least one transverse tape (301) with an eyelet (401) for engagement with corresponding eyelets (401) or hooks associated with further tubular elements or with the tarpaulin with which the element is designed to be coupled when it is installed.

2. A combination as claimed in claim 1, **characterized in that** it is made of a plastic or elastic material, covered by a technical fabric, namely Dacron, Kevlar or Cordura, which defines and ensures maintenance of the working shape.

3. A combination as claimed in claim 1 or 2, **characterized in that**
it has a handle (601), particularly having a longitudinal extension, at one end, particularly the end opposite to that with the annular appendix.

4. A combination as claimed in one or more of the preceding claims, **characterized in that** it comprises a longitudinal fabric or
hook-and-loop strap (201) of a fastening stretch or Velcro assembly, the corresponding fabric or hook-and-loop strap of the assembly being provided for association with the tarpaulin for removable coupling of the element to the tarpaulin.

5. A combination as claimed in one or more of the preceding claims comprising three tubular elements, wherein two elements are connected by means of their respective annular appendix to a pair of eyelets or hooks of the third tubular element, the pair of eyelets or hooks of the third element being disposed proximate to the center to form a double-T configuration with a cross member and a pair of posts, when in operation.

6. A combination as claimed in claim 5, **characterized in that** there are three tubes to form a double T-shaped support structure having a cross member and two posts, the cross member being attached to one side of the tarpaulin for the tarpaulin to be stretched along its length or width and for the operator to act upon the posts to move the tarpaulin over the body.

7. A combination as claimed in claim 5, **characterized in that** there are three tubes to form a double T-shaped support structure having a cross member and two posts, the cross member being attached to the tarpaulin in a center position, for a portion of the tarpaulin to be stretched and folded along its length or width and for an operator to act upon the posts to move the tarpaulin over the body, a reinforcement bar being provided to add rigidity to the inflatable structure.

8. A combination as claimed in claim in one or more of the preceding claims , **characterized in that** the tubular elements are attached or integrated along two opposite sides of the tarpaulin to act as a pair of ribs of the tarpaulin as they assume the working shape, the tarpaulin and/or the tubular elements having fastening elements, such as magnets, to attach the structure to the truck body to be covered.

9. A combination as claimed in claim 8, **characterized in that** it is provided in combination with a truck body having the shape of a parallelepiped, with the tarpaulin being attached to a side surface thereof, substantially along the entire height, or proximate to its maximum height, such that it may be folded back onto its upper surface once the tubular elements have assumed the working shape.

10. A combination as claimed in one or more of the preceding claims , wherein three tubular elements are assembled together to form a portal composed of a pair of posts and a cross member, the base of the posts being equipped with rolling elements, for the cross member of the portal to be translated over the truck body when the posts are moved at the opposite sides of the body, the tarpaulin being initially wound on the cross member of the portal and being unwound as the portal is translated along the length of the body.

11. A combination as claimed in claim 10, **characterized in that** it is provided in combination with a truck body, the tarpaulin being attached proximate to the top of a side surface of the body, e.g. by magnets, for the tarpaulin to be deployed over the body as the portal is translated.

## Patentansprüche

1. Kombination einer Schutzplane zum Abdecken eines Körpers von schweren Lastkraftwagen mit einem oder mehreren rohrförmigen Elementen, wobei die Plane Elemente zur Kopplung oder Aufnahme eines oder mehrerer der genannten rohrförmigen Elemente aufweist; wobei die genannten rohrförmigen Elemente aus einer Ausgangsruheform, in der das Element entleert oder teilweise entleert ist, in eine Arbeitsform aufblasbar sind, **dadurch gekennzeichnet, dass** das rohrförmige Element modular ausgebildet ist und Ankerpunkte (401, 801) für gleichartige Rohrelemente aufweist, so dass es eine Vielzahl von Stützstrukturen für die Schutzplane bilden kann, die somit auf unterschiedliche Weise verlegt werden kann, wenn ein solches rohrförmiges Element oder solche rohrförmigen Elemente mit der Plane gekoppelt ist/sind und dass jedes rohrförmige Element an einem Ende (701) einen ringförmigen Ansatz (801) aufweist, der dazu ausgebildet ist, mit entsprechenden Haken (401) oder Ösen von gleichartigen Rohrelementen gekoppelt zu werden, um T-förmige Strukturen zu bilden; wobei das mindestens eine rohrförmige Element sich entlang einer geraden Achse erstreckt und mindestens ein Querband (301) mit einer Öse (401) zum Eingriff mit entsprechenden Ösen (401) oder Haken aufweist, die weiteren rohrförmigen Elementen oder der Plane zugeordnet sind, mit denen das Element beim Einbau gekoppelt ist.

2. Kombination nach Anspruch 1, **dadurch gekennzeichnet, dass** sie aus einem Kunststoff oder einem elastischen Material besteht, das mit einem technischen Gewebe, nämlich Dacron, Kevlar oder Cordura, verkleidet ist, das eine Aufrechterhaltung der Arbeitsform definiert und sicherstellt.

3. Kombination nach Anspruch 1 oder 2, **dadurch gekennzeichnet, dass** sie an einem Ende, insbesondere dem dem ringförmigen Ansatz gegenüberliegenden Ende, einen Griff (601), insbesondere mit einer Längserstreckung, aufweist.

4. Kombination nach einem oder mehreren der vorhergehenden Ansprüche, **dadurch gekennzeichnet, dass** sie ein längserstrecktes Gewebe oder Klettband (201) einer Befestigungsstrecke oder Velcro-Anordnung umfasst, wobei das entsprechende Gewebe oder Klettband der Anordnung zur Verbindung mit der Plane zur lösbaren Kopplung des Elements mit der Plane vorgesehen ist.

5. Kombination nach einem oder mehreren der vorhergehenden Ansprüche, welche drei rohrförmige Elemente umfasst, wobei zwei Elemente über ihren jeweiligen ringförmigen Ansatz mit einem Paar von Ösen oder Haken des dritten rohrförmigen Elements verbunden sind, wobei das Paar von Ösen oder Haken des dritten Elements in der Nähe der Mitte angeordnet ist, um im Betrieb eine Doppel-T-Konfiguration mit einer Traverse und einem Paar von Ständern zu bilden.

6. Kombination nach Anspruch 5, **dadurch gekennzeichnet, dass** es drei Rohre zur Bildung einer Doppel-T-förmigen Tragstruktur mit einer Traverse und zwei Ständer vorgesehen sind, wobei die Traverse an einer Seite der Plane befestigt ist, damit die Plane entlang ihrer Länge oder Breite gestrafft wird und damit der Bediener auf die Ständer einwirkt, um die Plane über den Körper zu bewegen.

7. Kombination nach Anspruch 5, **dadurch gekennzeichnet, dass** drei Rohre vorgesehen sind, um eine Doppel-T-förmige Tragstruktur mit einer Traverse und zwei Ständer zu bilden, wobei die Traverse in einer Mittelposition an der Plane befestigt ist, damit ein Abschnitt der Plane entlang ihrer Länge oder Breite gestrafft und gefaltet wird und damit ein Bediener auf die Ständer einwirkt, um die Plane über den Körper zu bewegen, wobei ein Verstärkungsstab vorgesehen ist, um der aufblasbaren Struktur weitere Steifigkeit zu verleihen.

8. Kombination nach Anspruch in einem oder mehreren der vorhergehenden Ansprüche, **dadurch gekennzeichnet, dass** die rohrförmigen Elemente entlang zweier gegenüberliegender Seiten der Plane befestigt oder integriert sind, um als ein Paar von Rippen der Plane zu wirken, wenn sie die Arbeitsform annehmen, wobei die Plane und/oder die rohrförmigen Elemente Befestigungselemente, wie Magnete, aufweisen, um die Struktur an dem zu bedeckenden Lkw-Körper zu befestigen.

9. Kombination nach Anspruch 8, **dadurch gekennzeichnet, dass** sie in Kombination mit einem die Form eines Parallelepipeds aufweisenden LKW-Körper vorgesehen ist, wobei die Plane an einer Seitenfläche derselben im Wesentlichen entlang der gesamten Höhe oder in der Nähe seiner maximalen Höhe befestigt ist, so dass sie auf seine Oberfläche zurückgefaltet werden kann, sobald die rohrförmigen Elemente die Arbeitsform angenommen haben.

10. Kombination nach einem oder mehreren der vorhergehenden Ansprüche, **dadurch gekennzeichnet, dass** drei rohrförmige Elemente zu einem Portal zusammengesetzt sind, das aus einem Paar von Ständern und einer Traverse besteht, wobei die Basis der Ständer mit Rollelementen derart ausgestattet ist, dass die Traverse des Portals beim Bewegen der Ständer an den gegenüberliegenden Seiten des Körpers über den LKW-Körper verfahren wird, wobei die Plane zunächst auf die Traverse des Portals aufgewickelt ist und beim Verfahren des Portals entlang der Körperlänge abgewickelt wird.

11. Kombination nach Anspruch 10, **dadurch gekennzeichnet, dass** sie in Kombination mit einem LKW-Körper vorgesehen ist, wobei die Plane in der Nähe der Oberseite einer Seitenfläche des Körpers, z. B. durch Magnete, angebracht ist, damit beim Verfahren des Portals die Plane über den Körper entfaltet wird.

## Revendications

1. Une combinaison d'une bâche de protection pour recouvrir une benne de camion poids lourd avec un ou plusieurs éléments tubulaires, la bâche ayant des éléments pour coupler ou retenir l'un ou plusieurs desdits éléments tubulaires;
lesdits éléments tubulaires pouvant être gonflés pour atteindre une forme opérationnelle à partir d'une forme de repos initiale dans laquelle l'élément est dégonflé ou partiellement dégonflé, **caractérisée en ce que** l'élément tubulaire est de type modulaire et présente des points d'ancrage (401, 801) pour des éléments tubulaires du même type, de telle sorte qu'il puisse former une multiplicité de structures de support pour ladite bâche de protection, qui peut donc être posée de différentes manières lorsque tel(s) élément(s) tubulaire(s) est/sont couplé(s) à ladite bâche et **en ce que**
chaque élément tubulaire présente un appendice annulaire (801) à une extrémité (701), qui est conçu pour être couplé à des crochets (401) ou à des œillets correspondants d'éléments tubulaires du même type, de sorte à former des structures en forme de T;
le au moins un élément tubulaire s'étend le long d'un axe et présente au moins un ruban transversal (301) avec un œillet (401) pour s'engager avec des œillets (401) ou des crochets correspondants associés à d'autres éléments tubulaires ou avec la bâche avec laquelle l'élément est conçu pour être couplé lors de son installation.

2. Une combinaison telle que revendiquée dans la revendication 1, **caractérisée en ce qu'**elle est réalisée d'un matériau plastique ou d'un matériau élastique, revêtu d'un tissu technique, c.à.d. Dacron, Kevlar ou Cordura, qui définit et assure le maintien de la forme opérationnelle.

3. Une combinaison telle que revendiquée dans la revendication 1 ou 2, **caractérisée en ce qu'**elle
présente une anse (601), notamment présentant une extension longitudinale à une extrémité, notamment l'extrémité opposée à celle ayant l'appendice annulaire.

4. Une combinaison telle que revendiquée dans l'une ou plusieurs des revendications précédentes, **caractérisée en ce qu'**elle comprend un tissu longitudinal ou une bande auto-agrippant (201) d'un ensemble extensible de fixation ou de Velcro, le tissu correspondant ou la bande auto-agrippant de l'ensemble étant fournie pour être associé à la bâche pour le couplage amovible de l'élément à la bâche.

5. Une combinaison telle que revendiquée dans l'une ou plusieurs des revendications précédentes, comprenant trois éléments tubulaires, dans laquelle deux éléments sont reliés au moyen de leur appendice annulaire respectif à une paire d'œillets ou de crochets du troisième élément tubulaire, la paire d'œillets ou de crochets du troisième élément étant disposée à proximité du centre pour former une configuration en forme de double T avec une traverse et une paire de montants, lorsque qu'elle est en fonctionnement.

6. Une combinaison telle que revendiquée dans la revendication 5, **caractérisée en ce qu'**il y a trois tubes pour former une structure de support en forme de double T ayant une traverse et deux montants, la traverse étant reliée à un côté de la bâche pour que la bâche puisse être étirée le long de sa longueur ou de sa largeur et pour permettre à l'opérateur d'agir sur les montants pour déplacer la bâche sur la benne.

7. Une combinaison telle que revendiquée dans la revendication 5, **caractérisée en ce qu'**il y a trois tubes pour former une structure de support en forme de double T ayant une traverse et deux montants, la traverse étant reliée à la bâche dans une position centrale, pour qu'une portion de la bâche puisse être étirée et pliée le long de sa longueur ou de sa largeur et pour permettre à un opérateur d'agir sur les montants pour déplacer la bâche sur la benne, une barre de renforcement étant prévue pour ajouter de la rigidité à la structure gonflable.

8. Une combinaison telle que revendiquée dans l'une ou plusieurs des revendications précédentes, **caractérisée en ce que** les éléments tubulaires sont reliés ou intégrés le long de deux côtés opposés de la bâche de sorte à agir comme une paire de nervures de la bâche lorsqu'ils assument la forme opérationnelle, la bâche et/ou les éléments tubulaires ayant des éléments de fixation, tels que des aimants, pour attacher la structure à la benne du camion à recouvrir.

9. Une combinaison telle que revendiquée dans la revendication 8, **caractérisée en ce qu'**elle est prévue en combinaison avec une benne de camion ayant la forme d'un parallélépipède, avec la bâche attachée à une surface latérale de la même, essentiellement le long de toute la hauteur, ou à proximité de sa hauteur maximale, de sorte qu'elle puisse être repliée sur sa surface supérieure dès que les éléments tubulaires ont assumés la forme opérationnelle.

10. Une combinaison telle que revendiquée dans l'une ou plusieurs des revendications précédentes, dans laquelle trois éléments tubulaires sont montés ensemble pour former un portail composé d'une paire de montants et d'une traverse, la base des montants étant équipée avec des éléments roulants, de façon à pouvoir translater la traverse du portail sur la benne du camion lorsque les montants sont déplacés au côté opposé de la benne, la bâche étant initialement enroulée sur la traverse du portail et étant déroulée lorsque le portail est translaté le long de la longueur de la benne.

11. Une combinaison telle que revendiquée dans la revendication 10, **caractérisée en ce qu'**elle est prévue en combinaison avec une benne de camion, la bâche étant attachée à proximité du haut d'une surface latérale de la benne, par ex. par des aimants, pour déployer la bâche sur la benne lorsque le portail est translaté.
